# EUROPEAN PATENT APPLICATION

(11) **EP 1 114 940 A2**
(43) Date of publication of application: **11.07.2001**
(21) Application number: 00115698.3
(22) Date of filing: 21.07.2000
(51) Int. Cl.: F16C 33/12, F16C 33/14, F16C 23/04

(54) **A spherical bearing and a manufacturing method thereof**

(30) Priority: 05.01.2000 JP 2000000352
(71) Applicant: MINEBEA CO., LTD., Kitasaku-gun, Nagano-ken (JP)
(72) Inventor: Sasaki, Gen, c/oMinebea Co., Ltd., Miyota-machi, Kitasaku-gun, Nagano (JP); Akao, Shinichi, c/oMinebea Co., Ltd., Miyota-machi, Kitasaku-gun, Nagano (JP)
(74) Representative: Patentanwälte Schaad, Balass, Menzl & Partner AG

(57) **Abstract**

By the contraction process in which the contraction die is made to displace a pair of inner spherical surfaces in the direction of approaching each other to deform plastically the outer race 1 in such a manner as the outer race 1 is followed along the spherical surface 2a of the inner race 2. And the releasing process in which, by a releasing device comprising a plurality of rollers, the outer race is rotated while the peripheral surface 1b of the outer race 1 deformed plastically being pressed by a plurality of rollers to release the internal stress of the outer race 1, the spherical bearing wholly made of titanium alloy is formed.

Thus constituted, since a slide is generated between every ridge 6 of the outer race 1 and a pair of spherical surfaces, the outer race 1 is deformed plastically in such a manner as the outer race 1 is followed along the spherical surface 2a of the inner race 2, the spherical bearing wholly made of the titanium alloy for industrial use can be formed.

## Description

### Background of the invention

### Field of the invention

This invention relates to a spherical bearing and a manufacturing method thereof, in particular, a spherical bearing using a titanium alloy for industrial use or a heat treated type of aluminum alloy and a manufacturing method thereof.

### Related art

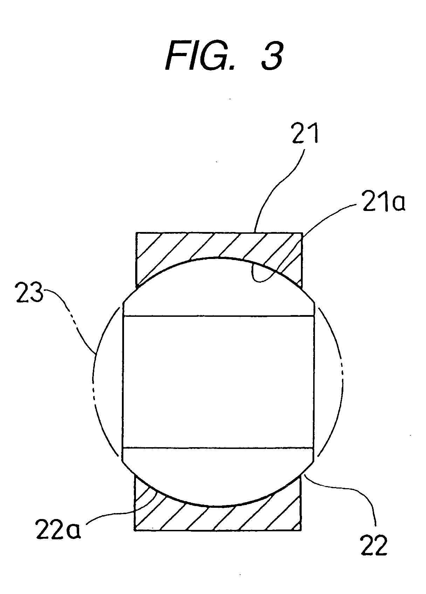

A spherical bearing is, in general, as shown in Fig. 3, formed so as to support a spherical surface 22a of an inner race 22 rotatably and slidably on the inner circumferential surface 21a of an outer race 21.The inner circumferential 21a of the outer race 21 is in advance formed by an arc which becomes in coincidence with a circle 23 including a sectional plane through an axis of the spherical surface 22a of the inner race 22, and the spherical surface 22a is pushed in and coupled with the inner circumferential surface 21a of the outer race 21. Further, as a spherical bearing due to a high rigidity and easy workability, steel or steel alloy has been used and widely used in a broad field such as air planes and vehicles and so on. Recently, as metal materials for air planes, a light weighted and high tensile strength of titanium alloy for industrial use such as Ti-6A1-4V alloy or a heat treated type of aluminum alloy such as duralumins or ultra-duralumins has been noticed, and in spherical bearings too used widely in air planes, it has been required to make it light weighted by using the titanium alloy or the heat treated type of aluminum alloy.

However, since these titanium alloys or the heat treated aluminum alloys have a characteristic hard and being low in extension, it is hard to make the spherical surface 22a pressed in the inner circumferential surface 21a of the outer race 21, and that if it is urged to do that process, the outer race 21 has been threatened to generate cracks to be broken, so that, it has been difficult to realize a spherical bearing wholly made of titanium alloy for industrial use or heat treated type of aluminum alloy.

Therefore, the present invention has been made in the light of the above circumstances, the object thereof is to provide a spherical bearing wholly made of the titanium alloys for industrial use or a spherical bearing wholly made of the heat treated type of aluminum alloys.

To attain the above object, according to a first aspect of the present invention, in a spherical bearing which is formed by an outer race and an inner race a spherical surface of which is supported rotatably and slidably in the inner circumferential surface of the outer race, the spherical bearing is made of wholly titanium alloys for industrial use.

By constituted as such, the spherical bearing made of wholly titanium alloy, which is superior in corrosion resistance and heat resistance, is provided.

According to a second aspect of the present invention, in a spherical bearing which is formed by an outer race and an inner race an spherical surface of which is supported rotatably and slidably in the inner circumferential surface of the outer race, the spherical bearing is made of wholly heat treated type of aluminum alloys.

By constituted as such, the spherical bearing made of wholly the heat treated type of aluminum alloys can be provided.

Further, according to a third aspect of the present invention, a manufacturing method of the spherical bearings described in the first and second aspects, comprises the steps of coupling a spherical surface of the inner race with an inner circumferential surface of an outer race formed in a cylinder, contracting the inner circumferential surface of the outer race so as to make it followed to the spherical surface of the inner race by pressing a contraction die in an axial direction which has a pair of inner spherical surfaces to be contacted with respective ridges formed by the peripheral surfaces of the outer race and both end faces in such a manner as the spherical surfaces clamp the ridges respectively in the axial direction and deforming the outer race due to a plastic deformation,
clamping the outer race deformed plastically due to the contraction step with a plurality of rollers loosening to release an inner stress of the outer race by making the outer race rotated while giving a given pressure.

By structured as such, in the contraction step, the spherical surface of the inner race is coupled with the circumferential surface of the outer race formed in the cylinder, the outer race is pressed by the contraction die in the axial direction in such a manner as a pair of inner spherical surfaces make the every ridge of the outer race slide so as to follow the inner spherical surfaces to deform plastically the outer race, and thereby, without being pressed in, an assembly in which the spherical surface of the inner race is supported with the inner circumferential surface of the outer race can be formed, further, in the releasing step, the outer race of the assembly formed by the contraction step is clamped with a plurality of rollers and by making such outer race rotated while giving a given pressure to the rollers the remained stress is relieved to obtain the spherical bearing having a given sliding torque.

### Brief description of the drawings

Fig. 1 is for explanation of one embodiment of the spherical bearing of the present invention.

Fig. 2 is for explanation of a plastic deformation of the outer race in the manufacturing method of an embodiment of the spherical bearing.

Fig. 3 is an explanation of a conventional spherical bearing.

### Embodiment

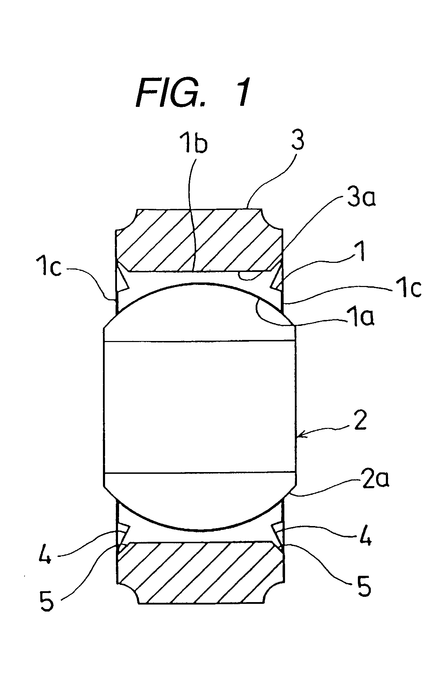

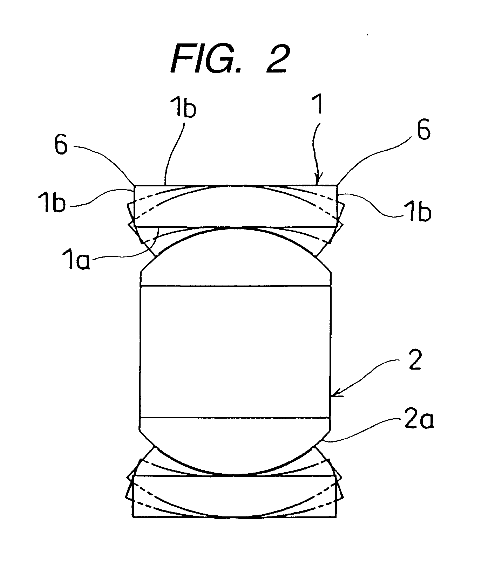

A spherical bearing and a manufacturing method of an embodiment of the present invention are explained with reference to Figs. 1 and 2. First, an outline of the spherical bearing of the embodiment is explained. The spherical bearing of the embodiment of the present invention, as shown in Fig. 1, comprises an inner race on the periphery of which a spherical surface 2a is formed and an outer race 1 having an inner circumferential surface 1a to support the spherical surface 2a rotatably and slidably, and is structured in such a manner as a periphery surface 1b of the outer race 1 assembled with the inner race 2 is coupled with a race coupling hole 3a of a housing 3 as a portion to be fixed. Further, the spherical bearing consisting of the outer race 1 and the inner race 2 is, as shown in Fig. 1, fixed to a housing 3 as a portion to be fixed in such a manner as portions 4 to be engaged are formed on both side edges of the periphery surface 1b of the outer race 1 so as to be projected from the periphery surface 1b, on both side edges of the race coupling hole 3a chamfered engaging portions 5 are formed, and by pressing the outer race 1 assembled with the inner race 2 in the race coupling hole 3a the engaging portions 5 formed on the race coupling hole 3a is engaged with the portions 4 to be engaged of the outer race 1.

Next, a manufacturing method of the embodiment of the spherical bearing is explained. Hereinafter, a process of assembling the inner race 2 with the outer race 1 is explained.
(1) First, as shown in Fig. 2, in the state where the spherical surface 2a of the inner race 2 is coupled with the inner circumferential surface la of the outer race 1 formed cylindrical, the outer race 1 and the inner race 2 are set on a contraction die (not shown) settled on a not shown press machine. For reference, this contraction die comprises an upper die and a lower die which consist of spherical inner surfaces respectively approximately similar shaped to the spherical surface 2a of the inner race 2 and are displaceable in approaching and separating directions.
(2) Next, a ram of the press machine is made with a stroke and by making the inner spherical surfaces of the upper and lower dies of not shown contraction die and come close to each other toward an axis of the spherical bearing (hereinafter referred to as "an axis"), first, make a pair of inner spherical surfaces of the upper and lower dies abutted to each ridge 6 of the outer race 1. And, by pressing each of ridges 6 of the outer race 1 with not shown a pair of inner spherical surfaces, a slide is caused to be generated between the ridges 6 and the inner spherical surfaces and at the end of the stroke of the contraction die, the outer race 1 is deformed plastically in such a manner as it is along with the spherical surface 2a of the inner race 2.
   And, if it is as the contraction process is not applied, since an internal tension r
   emains within the outer race 1 deformed plastically, at the inner circumferential surface la of the outer race 1 in such a manner as it presses the spherical surface 2a of the inner race 2, a sliding between the inner circumferential surface la of the outer race 1 and the spherical surface 2a of the inner race 2 can not be generated.
(3) Next, the outer shape of the outer race 1 is formed to a given shape by working such as grinding, and the peripheral surface 1b of the outer race 1 which holds firmly the spherical surface 2a of the inner race 2 is clamped by a plurality of rollers of a not shown releasing machine and the outer race 1 is rotated by the rollers while the peripheral surface 1b of the outer race 1 being pressed by the rollers. Thereby, the remaining internal stress inside the outer race 1 is gradually released to reduce the contact pressure between the inner circumferential surface 1a of the outer race 1 and the spherical surface 2a of the inner race 2. As a result, the spherical surface 2a of the inner race 2 can be rotated and slid on the inner circumferential surface 1a of the outer race 1. Now, in the releasing process, by regulating the pressure and time period with which the periphery surface 1b of the outer race 1 is pushed by a plurality of rollers, the extent which may release the remaining internal stress of the outer race 1, that is, by controlling the surface contact pressure between the inner circumferential surface la and the spherical surface 2a of the inner race 1, the sliding torque of the spherical bearing can be regulated.

Accordingly, in the contraction process, the cylindrically formed outer race 1 and the inner race 2 the peripheral surface of which is formed spherical are set to the contraction die comprising a pair of inner spherical surfaces to each of which each ridge 6 of the outer race 1 abuts in such a manner as the spherical surface 2a of the inner race 2 is coupled with the inner circumferential surface la of the outer race 1. And, by displacing a pair of inner spherical surfaces so as to approach each other and making a pair of inner surfaces and the respective ridge 6 of the outer race 1 the outer race 1 is deformed plastically in such a manner as it follows along the spherical surface 2a of the inner race 2. By constituting as such, since the stress given to the outer race 1 is dispersed, even in the case where the material is a high tensile alloy, any crack is not generated thereon to deform the outer race 1 plastically. Further, since, in the releasing process, by making a plurality of rollers rotated while pressing the peripheral surface 1b of the outer race 1, the remaining stress in the outer race 1 is released to reduce the surface contact pressure between the inner circumferential surface 1a and the spherical surface 2a of the inner race 2, the spherical surface 2a of the inner race 2 can be rotated and slid on the inner circumferential surface la. Further, by regulating the pressure and time period with which the peripheral surface 1b of the outer race 1 is pushed by a plurality of rollers, the extent which may release the remaining internal stress of the outer race 1, that is, by regulating the surface contact pressure between the inner circumferential surface la and the spherical surface 2a of the inner race 1, the sliding torque of the spherical bearing can be regulated.

### Embodiment

Hereinafter, an embodiment of a spherical bearing wholly made of titanium alloy for industrial use is explained. An outer race 1 and an inner race 2 are formed by a whole titanium alloy for industrial use, preferably Ti-6A1-4V alloy superior in high tensile strength, corrosion resistance and heat resistance. For reference, on the spherical surface 2a of the inner race 2 a surface hardening treatment such as ceramic coating, hard chrome plating and ion coating is applied, and on the inner circumferential surface 1a of the outer race 1 a sliding liner such as polytetrafluoroethylene is covered. Further, a housing 3 as a portion to be fixed may be wholly made of titanium alloy for industrial use.

Next, the function of the spherical bearing wholly made of titanium alloy for industrial use is explained based on Table 1.

**Table 1**

| | Steel made | Titanium alloy |
|---|---|---|
| Radial static limit load(MPa) | 482 | 482 |
| | | |
| Axial static limit load (MPa) | 309 | 309 |
| | | |
| Radial oscillation load (MPa) | 220 | 220 |
| | | |
| Mass ratio | 100 | 57 |

As shown in Table 1, comparing a spherical bearing made of steel with a spherical bearing wholly made of titanium alloy (Ti-6A1-4v alloy) for industrial use, on one hand, the spherical bearing wholly made of titanium alloy has strength identical with the spherical bearing made of steel in a radial static rating load, an axial static rating load and a radial swing load, on the other hand however a mass ratio is of 57 % to the spherical bearing made of steel. Thus, by making the spherical bearing with whole titanium alloy for industrial use, while keeping the strength identical with the conventional spherical bearing made of steel, the mass ratio can be reduced by 40 %, and further, a characteristic superior in corrosion resistance and heat resistance can be obtained.

Next, an embodiment of the spherical bearing wholly made of aluminum alloy is explained.

The outer race 1 and the inner race 2 are formed with whole heat treated type of aluminum alloy, preferably a high tensile and light weight duralumins. For reference, the spherical surface 2a of the inner race 2 is treated with a hard surface treatment such as ceramic coating, hard chrome plating and ion coating and on the inner circumferential surface la of the outer race 1 is covered with a sliding liner of such as polytetrafluoroethylene. Further, the housing 3 as a portion to be fixed may be wholly made of the heat treated type of aluminum alloy.

Next, the function of the spherical bearing wholly made of aluminum alloy using a heat treated type of aluminum alloy is explained based on the Table 2.

**Table 2**

| | Steel alloy made | Al alloy made |
|---|---|---|
| Radial static limit load (MPa) | 482 | 276 |
| | | |
| Axial static limit load (MPa) | 309 | 164 |
| | | |
| Mass ratio | 100 | 37 |

As shown in Table 2, the spherical bearing made of heat treated type of aluminum alloy (duralumins) shows the strength of 57 % in radial static limit load and of 53% in axial static limit to the spherical bearing made of steel respectively, however the mass ratio to the spherical bearing made of steel is of 37 %. Accordingly, if it is within allowance concerning the strength, by replacing the spherical bearing made of steel with the whole aluminum spherical bearing using the heat treated aluminum alloy, it becomes possible to make it light-weighted more than 60 %.
Further, the spherical bearing wholly made of the heat treated aluminum alloy can be formed without any cracks because the outer race 1 and the inner race 2 comprising the spherical surface 2a are applied with the contraction process and the releasing process. For reference, by forming the housing 3 as the portion to be fixed also with whole aluminum alloy using the heat treated type of aluminum alloy, a further making light weighted can be realized.

According to the first aspect of the present invention, since the spherical bearing is wholly made of the titanium alloy using the titanium alloy for industrial use, while keeping the strength identical with the strength of the spherical bearing, the spherical bearing light-weighted, superior in corrosion resistance and heat resistance can be obtained.

According to the second aspect of the present invention, since the spherical bearing is wholly made of the heat treated type of aluminum alloy, it can become light-weighted comparing with the spherical bearing made of steel, over 60 %, and for example, by replacing the spherical bearings used in many in the air planes with the spherical bearing made of the heat treated type of aluminum alloy, the weight of the body of the airplanes is reduced to save fuels for airplanes.
According to the third aspect of the present invention, in the contraction process, by pressing each ridge of the outer race formed cylindrical in such a manner as those are clamped with a pair of inner spherical surfaces of the contraction die toward the axis and making them slid on a pair of spherical surfaces, the outer race is deformed plastically along the spherical surface of the inner race, so that the stress given to the outer race is dispersed and even if the material is a high tensile alloy, the outer race is easily deformed plastically without generating any crack. And, in the releasing process, by rotating the inner race while pressing the peripheral surface of the outer race deformed by the contraction process plastically with plurality of rollers, the internal stress remaining in the outer race is released to reduce the contact surface pressure between the inner circumferential surface of the outer race and the spherical surface of the inner race 2, thereby the spherical surface of the inner race can be rotated and slid against the inner surface of the outer race. Further, by regulating the pressure to press on the periphery of the outer race with a plurality of rollers, the time period and an extent in which the remaining internal stress is released, that is, the contact surface pressure between the inner circumferential surface of the outer race and the spherical surface of the inner race, the sliding torque of the spherical bearing can be regulated.

## Claims

1. A spherical bearing comprising an outer race and an inner race the spherical surface of which is supported rotatably and slidably on an inner circumferential surface of the outer race, wherein the spherical bearing is formed with the whole titanium alloy for industrial use.

2. A spherical bearing comprising an outer race and an inner race, the spherical surface of which is supported rotatably and slidably on an inner circumferential surface of the outer race, wherein the spherical bearing is formed with the whole aluminum alloy using a heat treated type of aluminum alloy.

3. A manufacturing method of a spherical bearing described in Claim 1 or 2, in which an outer race and an inner race, the spherical surface of which is supported rotatably and slidably on an inner circumference surface of the outer race, wherein the method comprises a contraction process, in which a spherical surface of the inner race is coupled with an inner circumferential surface of the outer race formed cylindrical, by pressing a contraction die which comprises a pair of inner spherical surfaces to abut to ridges being formed between the periphery and both end faces of the outer race toward an axis in such a manner as the inner spherical surfaces clamp each of the ridges to deform the outer race plastically to make the inner circumferential surface of the outer race followed along the spherical surface of the inner race, and a releasing process, in which the outer race deformed plastically by the contraction process is clamped with a plurality of rollers, and by making the inner race rotated while pressing the outer race with a plurality of rollers at a given pressure to release a remaining internal stress.
